# EUROPEAN PATENT SPECIFICATION

(11) **EP 3 010 308 B1**
(45) Date of publication and mention of the grant of the patent: **13.12.2017**
(21) Application number: 14811068.7
(22) Date of filing: 04.06.2014
(51) Int. Cl.: H05B 6/12, F24C 7/08, H05B 6/06

(54) **INDUCTION HEATING APPARATUS**
INDUKTIONSERWÄRMUNGSVORRICHTUNG
DISPOSITIF DE CHAUFFAGE PAR INDUCTION

(30) Priority: 11.06.2013 JP 2013122312
(43) Date of publication of application: 20.04.2016
(73) Proprietor: Panasonic Intellectual Property Management Co., Ltd., Osaka-shi, Osaka 540-6207 (JP)
(72) Inventor: NIIYAMA, Kohji, Chuo-ku, Osaka 540-6207 (JP); TERAMOTO, Takahiro, Chuo-ku, Osaka 540-6207 (JP); KINOSHITA, Masashi, Chuo-ku, Osaka 540-6207 (JP); KISHIMOTO, Hidemi, Chuo-ku, Osaka 540-6207 (JP)
(74) Representative: Eisenführ Speiser
(86) International application number: PCT/JP2014/002981
(87) International publication number: WO 2014/199597

(56) References cited:
- EP-A1- 2 395 813
- EP-A1- 2 579 680
- EP-A2- 2 506 668
- DE-A1-102007 057 332
- JP-A- 2007 103 289
- JP-A- 2007 294 439
- JP-A- 2009 218 042
- JP-A- 2009 295 330
- JP-A- 2013 062 173

## Description

### TECHNICAL FIELD

This disclosure relates to an induction heating apparatus that induction-heats a cooking container such as a metallic cooking pan placed on a top plate.

### BACKGROUND

An induction heating cooking appliance generally used as an induction heating apparatus is configured, for example, to include one or two heating coil(s) disposed immediately beneath a top plate and to induction-heat a metallic cooking pan and the like of a cooking container placed on the top plate, by using the heating coil(s).

In addition, in the induction heating cooking appliance, a multi-coil configuration has been proposed that includes many heating coils disposed immediately beneath the top plate (for example, see Patent Literature 1). The induction heating cooking appliance disclosed in Patent Literature 1 includes many heating coils densely-arranged beneath the top plate that are disposed adjacent to each other, is configured to be able to induction-heat a cooking container such as a cooking pan even when the cooking container is placed at any position on the top plate, and is configured to include a display portion that performs a display thereon so as to correlate with the placement position and the size of the cooking container, and an operation portion that is disposed in the vicinity of the display indicating each cooking container for a user to execute an operation such that each combination of the heating coils is thereby operated to heat the cooking container.
From EP 2 395 813 A1 an induction heating cooker and a control method are known in which heating coils on which a container is located are sensed, a display unit displays a region corresponding to the heating coils on which the container is located, the displayed region is selected by a user, an output adjustment unit as to the displayed region is displayed, and output of the corresponding heating coils is adjusted by adjusting the output adjustment unit. The induction heating cooker includes heating coils to heat the container, a display unit to display the sensed container or the output adjustment unit of the heating coils, and the output adjustment unit to adjust the output of the heating coils on which the container is located.

### CITATION LIST

### PATENT LITERATURE

PATENT LITERATURE 1: Japanese Patent Laid-open Publication No. JP2008-293871A
PATENT LITERATURE 2: European Patent Application Publication No. EP 2 395 813 A1

### SUMMARY OF THE INVENTION

### TECHNICAL PROBLEM

As described above, in the induction heating cooking appliance disclosed in Patent Literature 1, in case that a plurality of cooking containers are placed thereon, a plurality of operation portions are necessary, and therefore, there is such a problem that each of the operation portions is small, and therefore, it is difficult to operate the operation portion. In addition, the position for the operation is changed according to the position of the placed cooking container, and therefore, there is such a problem that it is difficult to get used to the operation.

As described above, in case of the multi-coil configuration that includes many heating coils densely-arranged and disposed beneath the top plate, the user can heat a cooking container even when the cooking container is placed at any position on the top plate. Therefore, it is important how operations such as an operation for the heating power are input.

An object of the present invention is to provide an induction heating apparatus which is usable for a user and has the multi-coil configuration including many heating coils disposed beneath the top plate. The present invention constructs a heating apparatus easy to operate and usable by clearly displaying to a user a cooking container placed on the top plate and displaying menus capable of being cooked thereby corresponding to the position and the size of the cooking container, and presents an induction heating apparatus that is highly reliable and highly safe.

### SOLUTION TO PROBLEM

According to the present disclosure, there is provided a heating cooking apparatus including:
a top plate on which a cooking container for heating materials to be cooked is placed;
a plurality of heating coils configured to generate an induction magnetic field for heating the cooking container,
a heating controller portion configured to control high-frequency currents of the heating coils and control heating electric power of the cooking container;
at least one or more temperature detector means configured to be disposed at the center or in the vicinity of the heating coils and detect the temperature of the cooking container;
a cooking container detector portion configured to supply the heating coils with a high-frequency current in predetermined time intervals and determine the placement state and the material of the cooking container present immediately above each of the heating coils; and
an operation portion.

In case that the cooking container detector portion detects the cooking containers of the same material immediately above the heating coils adjacent to each other, the cooking container detector portion is configured to judge that the cooking containers are the same one cooking container and determine the size and the shape of the cooking container, and the operation portion is configured to display in a placement state display area a cooking container icon corresponding to the size and the shape determined by the cooking container detector portion, further display in a menu selection area a cooking menu icon representing a cooking menu capable of being cooked corresponding to the cooking container icon from the size and the shape of the cooking container and the disposition of the temperature detector means, and when the cooking menu icon is operated, start cooking of the cooking menu so as to heat the cooking container.

### ADVANTAGEOUS EFFECTS OF THE INVENTION

The induction heating apparatus of the present disclosure displays thereon menus corresponding to the placement position of a cooking container and the cooking container by simply placing the cooking container on the top plate, and therefore, it is not possible to select any menu unable to be cooked. Therefore, it is possible to realize simple and understandable operations. In addition, the selectable cooking menus are changed corresponding to the position to which the cooking container is moved, and therefore, it is possible to place the cooking container at the optimal position. Therefore, there is provided a heating apparatus having a high reliability and a high safety.

### BRIEF DESCRIPTION OF DRAWINGS

Fig. 1 is a side cross-sectional diagram schematically showing such a state that a cooking container is placed on an induction heating apparatus according to a first embodiment.
Fig. 2 is a top surface cross-sectional diagram schematically showing a disposition state of heating coils in the induction heating apparatus according to the first embodiment.
Fig. 3 is a diagram showing an exemplary display on an operation portion of the induction heating apparatus according to the first embodiment.
Fig. 4A is a diagram showing a display of an operation portion for menu selection when the cooking container is placed on two heating coils in the induction heating apparatus according to the first embodiment.
Fig. 4B is a diagram showing a display of an operation portion for menu selection when the cooking container is placed on two heating coils in the induction heating apparatus according to the first embodiment.
Fig. 5A is a diagram showing a display of an operation portion for menu selection when the cooking container is placed on one heating coil in the induction heating apparatus according to the first embodiment.
Fig. 5B is a diagram showing a display of an operation portion for menu selection when the cooking container is placed on one heating coil in the induction heating apparatus according to the first embodiment.
Fig. 6A is a diagram showing a display of an operation portion for menu selection when the cooking container is placed on one heating coil in the induction heating apparatus according to the first embodiment.
Fig. 6B is a diagram showing a display of an operation portion for menu selection when the cooking container is placed on one heating coil in the induction heating apparatus according to the first embodiment.

### DESCRIPTION OF EMBODIMENTS

A first invention includes:
a top plate on which a cooking container for heating materials to be cooked is placed;
a plurality of heating coils configured to generate an induction magnetic field for heating the cooking container,
a heating controller portion configured to control high-frequency currents of the heating coils and control heating electric power of the cooking container;
at least one or more temperature detector means configured to be disposed at the center or in the vicinity of the heating coils and detect the temperature of the cooking container;
a cooking container detector portion configured to supply the heating coils with a high-frequency current in predetermined time intervals and determine the placement state and the material of the cooking container present immediately above each of the heating coils; and
an operation portion.

In case that the cooking container detector portion detects the cooking containers of the same material immediately above the heating coils adjacent to each other, the cooking container detector portion is configured to judge that the cooking containers are the same one cooking container and determine the size and the shape of the cooking container, and the operation portion is configured to display in a placement state display area a cooking container icon corresponding to the size and the shape determined by the cooking container detector portion, further display in a menu selection area a cooking menu icon representing a cooking menu capable of being cooked corresponding to the cooking container icon from the size and the shape of the cooking container and the disposition of the temperature detector means, and when the cooking menu icon is operated, start cooking of the cooking menu so as to heat the cooking container.

According to the induction heating apparatus of the first embodiment configured as above, the placement state of the cooking container is displayed almost similarly to the operation portion in the placement state display area, and therefore, the actual image and the image of the display on the operation portion are easily matched with each other. Further, the placement state display area and the menu selection area are separated from each other, and therefore, even when the cooking container is placed in any way, the configuration and the display of buttons are always same that need to be operated by a user. Therefore, the operation method does not change and can be made easy to understand.

In a second invention, in particular, in the first invention, the operation portion is disposed on the front side of the top plate, and is configured to display a discontinuation icon for discontinuing the cooking on the front side of the cooking container icon corresponding to the cooking container during the cooking, and discontinue the cooking for the cooking container immediately when the discontinuation icon is operated. Therefore, it is possible to increase a safety.

One embodiment of the induction heating apparatus according to present disclosure will be described with proper reference to the drawings. For example, no detailed description for matters already well known and no repeated description for substantially same configurations may be made. This is to avoid unnecessary redundancy of the description below and to facilitate the understanding of those skilled in the art.

It is noted that the inventor provides the accompanying drawings and the following description for those skilled in the art to fully understand this disclosure and does not intend to limit thereby the subject matter described in claims.

For the induction heating apparatus of the following embodiment, an induction heating cooking appliance will be described while this configuration is an example. The present invention is therefore not limited to the configuration described in the following embodiment and includes any induction heating apparatus having the technical features of the present disclosure. In addition, the present invention includes proper combination of any arbitrary configurations described in each embodiment described below. Each of the combined configurations achieves its effect.

### (FIRST EMBODIMENT)

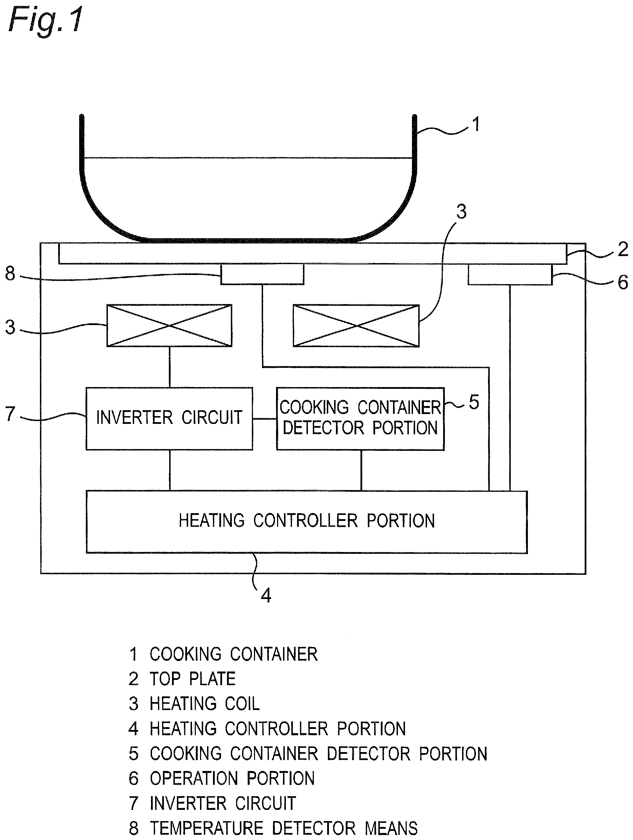

Fig. 1 is a side cross-sectional diagram schematically showing such a state that a cooking container is placed on a built-in typed induction heating cooking appliance that is an induction heating apparatus of a first embodiment according to the present disclosure.

A cooking container 1 shown in Fig. 1 is a container for putting therein items to be cooked such as cooking ingredients and is a pan, a frying pan, a kettle, and the like.

The cooking container 1 is placed on a top plate 2, which forms a portion of an outer shell of the induction heating cooking appliance. Crystallized glass is often used as the material of the top plate 2 and the material thereof is not limited to crystallized glass.

Heating coils 3 generate a magnetic flux by a high-frequency current supplied with according to an instruction of a heating controller portion 4, and induction-heat the cooking container 1 on the top plate 2.

The heating controller portion 4 is connected to an operation portion 6, an inverter circuit 7 and a cooking container detector portion 5. The heating controller portion 4 is connected to the operation portion 6 for a user of the induction heating cooking appliance to instruct the heating electric power and the like, supplies electric power to the inverter circuit 7 according to a heating instruction from the user, and controls the electric power supplied by the heating controller portion 4 so as to acquire the heating power intended by the user.

The cooking container detector portion 5 judges whether the cooking container 1 is present on the heating coils 3, and the heating controller portion 4 receives the result thereof and provides control such that only the heating coils 3 being immediately beneath the cooking container 1 are heated. The cooking container detector portion 5 can employ a method of disposing an electrode and detecting thereby variation of an electrostatic capacity between the electrode and the cooking container 1, a method of disposing a coil for detecting and detecting thereby variation of the inductance, a method of detecting from a response, etc. of an inverter when a high-frequency current is flowed into the heating coil 3 using the heating coil 3 and the inverter circuit 7, for example, a method of judging the placement state and the material of the cooking container 1 being immediately above each of the heating coils 3 by supplying the heating coils 3 with a high-frequency current at predetermined time intervals using the inverter circuit 7. Any method may however be employed. In addition, the type of material can be distinguished, for example, between a magnetic and a nonmagnetic materials, or between an iron pan and an aluminum pan, by detecting an input current to the inverter circuit 7, the current of each of the heating coils 3, and the voltage of a resonance capacitor resonating with the heating coil 3 and acquiring in advance the relation between these items and the material in experiments.

Though the heating controller portion 4 is often realized by a micro computer, a DSP, a custom IC, and the like, the heating controller portion 4 is not limited thereto. In addition, the heating controller portion 4 and the cooking container detector portion 5 may be the same one portion.

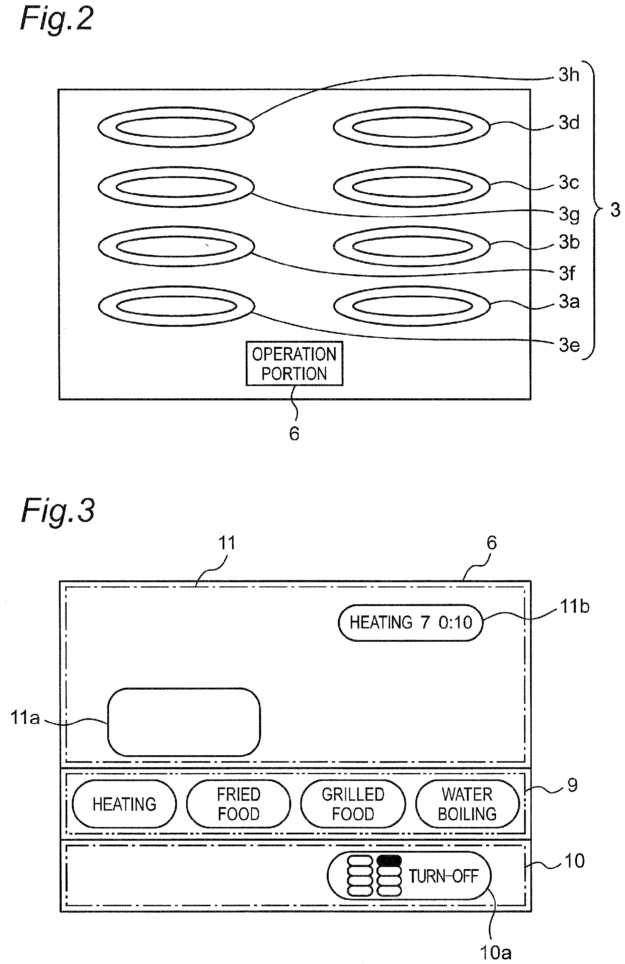

Since the induction heating cooking appliance of the present invention has the plural heating coils 3 present therein, Fig. 2 shows an example of a top surface cross-sectional diagram showing the state beneath the top plate 2 that schematically shows the disposition state of the heating coils.

In case of the induction heating cooking appliance configured as above, each of the heating coils 3 is relatively small as compared with the cooking container 1, and therefore, the heating controller portion 4 operates such that heating controller portion 4 supplies the plurality of heating coils with electric power, in order to heat the one cooking container 1. Thereby, even when the size and the placement position of the cooking container 1 are changed, the heating is executed suitably for the cooking container 1. Therefore, there is provided the induction heating cooking appliance that is characterized in that the induction heating cooking appliance provides an energy-saving and that the placement position of the cooking container 1 is not limited.

However, in case that the plurality of heating coils 3 heat the one cooking container 1 as described above, the usability is poor when a user operates one by one which one of the heating coils 3 is supplied with how much electric power. Therefore, an object of the present application is to solve this problem.

Usually, in the induction heating cooking appliance having the plurality of heating coils 3 arranged therein, the cooking container detector portion 5 determines whether the cooking container 1 is present immediately above the heating coils 3, the heating controller portion 4 determines how large the cooking container 1 is and where the cooking container 1 is placed from the result of the above determination, and determines the size and the shape of the cooking container 1. Concretely, when the cooking container detector portion 5 detects that the cooking containers 1 of the same material are placed immediately above the heating coils 3a to 3d of the heating coils 3 of Fig. 2, the heating controller portion 4 determines that the one cooking container 1 is placed so as to cover the four heating coils 3 and determines the size and the shape of the cooking container 1. The result of this determination is displayed on the operation portion 6 (see Fig. 3), and the heating controller portion 4 can supply the four heating coils 3 with the electric power so as to heat only by the user's execution of a heating operation with respect to the one cooking container 1 by using the operation portion 6. Therefore, it is possible to realize a usable induction heating cooking appliance.

In this case, at which position and in what size an operation panel is displayed significantly influences the usability of the induction heating cooking appliance. Conventionally, in case that an induction heating cooking appliance includes two to four heating coils 3, an operation panel is independently disposed corresponding to the respective heating coils 3. Even with this configuration, in case that the number of heating coils 3 is small, the operation is not complicated. However, in case that the heating coils 3 are many as those of the present application, it is not realistic that an operation panel is disposed for the respective heating coils 3 for the user to operate.

The usability is improved by grouping and operating every cooking container 1 corresponding to the detection result of the cooking container detector portion 5. However, in case of such an induction heating cooking appliance, it is possible to efficiently heat the cooking container 1 having various sizes and various shapes by varying the number of heating coils 3 operated corresponding to the size of the cooking container 1, while there is such a problem that the operation panel is displayed in what size and at which position. A conventional induction heating cooking appliance displays the operation panel in the vicinity of the cooking container 1 displayed as a result of the grouping. In this case, since the display of the cooking containers overlaps with the displays of the operation panels in case that a plurality of cooking containers are present, etc., each of the operation panels can be displayed only in a small size. Therefore, the usability is poor such as the case where the hierarchy becomes complicated when detailed settings are made. In addition, a change of the placement position of the cooking container 1 causes the display position of the operation panel to be changed, and therefore, there is such a problem that the feeling of use is changed resulting in poor usability.

Therefore, in the present application, as shown in Fig. 3, a usable induction heating cooking appliance is realized that can be operated with the same feeling of operation even when the cooking container 1 is placed in any way by dividing the display area of the operation portion 6 into three that are a placement state display area 11, a menu selection area 9, and a cooking discontinuation operation area 10 and fixing the role of each of the display areas.

The placement state display area 11 of Fig. 3 displays therein that two cooking containers 1 are placed. A cooking container icon 11b of the cooking container 1 placed on the heating coil 3d in the back on the right indicates that the cooking container 1 is during heating, and further displays therein the heating power and the remaining time period of the cooking. A cooking container icon 11a of the other cooking container 1 placed covering two heating coils of the heating coil 3e in front on the left and the heating coil 3f adjacent to the heating coil 3e displays menus capable of being cooked by the cooking container 1 in a menu selection area 9. In this case, the menus capable of being cooked in the cooking container icon 11a are judged based on the position and the size of the cooking container 1.

Further, a discontinuation icon 10a for discontinuing the heating for cooking of the cooking container 1 is displayed in the cooking discontinuation operation area 10. In this case, the discontinuation icon 10a for discontinuing the heating for cooking is configured to have an icon indicating the container in the back on the right displayed therein to be able to understandably, easily, and quickly discontinue, and therefore, the safety is improved. In addition, the cooking discontinuation operation area 10 is disposed at a position farthest from a heating portion in the uppermost portion of the heating coil 3 in the operation panel of the operation portion 6, and therefore, the operation is executed in the portion at the lowest temperature of the operation panel that is the operation face of the operation portion 6. Therefore, the safety is improved. That is, the induction heating cooking appliance is configured to have the operation portion 6 disposed on the front side of the top plate 2, display the discontinuation icon 10a for discontinuing the cooking on the front side of the cooking container icon 11b corresponding to the cooking container 1 during the cooking, and discontinue the cooking of the cooking container 1 immediately when the discontinuation icon 10a is operated.

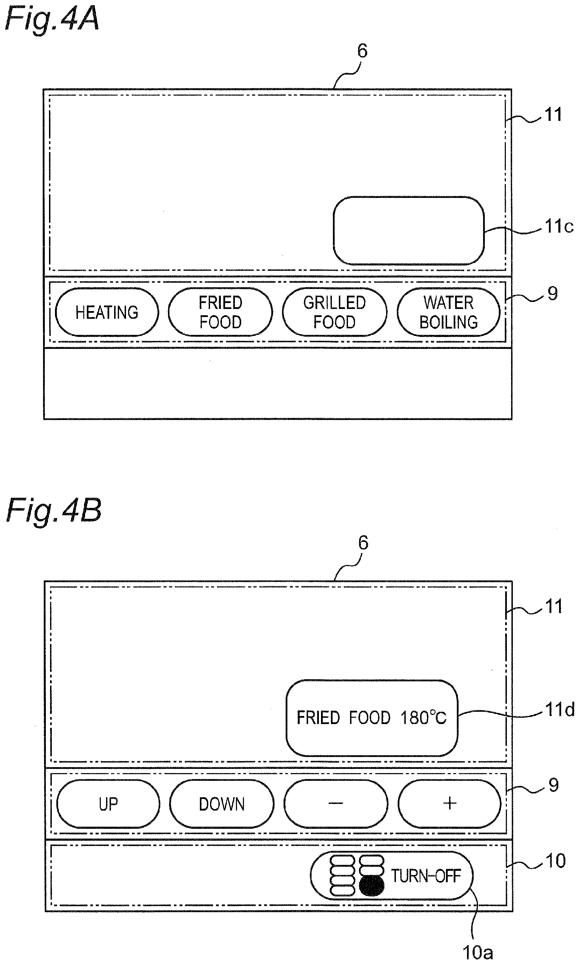

Next, operations from the placement of the cooking container 1 to the start of the cooking will be described using Fig. 4, Fig. 5, and Fig. 6.

Fig. 4A shows a cooking container icon 11c of the cooking container 1 placed covering the two adjacent heating coils of the heating coil 3a and the heating coil 3b. The cooking container detector portion 5 detects that the cooking container 1 is placed immediately above the heating coil 3a and the heating coil 3b. The heating controller portion 4 judges the menus capable of being cooked, from the placement position and the size, and displays cooking menu icons indicating all the cooking menus capable of being cooked that are "HEATING", "FRIED FOOD", "GRILLED FOOD", and "WATER BOILING" in the menu selection area 9. At this time, cooking of a selected cooking menu is started by selecting the cooking menu by operating the cooking menu icon.

Fig. 4B shows an exemplary display displayed after cooking of a "FRIED FOOD" is started by operating "FRIED FOOD" of the cooking menu icons. "UP", "DOWN", "+", and "-" operation icons are displayed instead of the cooking menu icons in the menu operation area 9. The set temperature is varied by operating the "UP" or the "DOWN", and fine adjustment of the set temperature can be executed by further operating the "+" or the "-". In addition, the discontinuation icon 10a for discontinuing the cooking of the "FRIED FOOD" is displayed in the cooking discontinuation operation area 10 of the operation panel 6. That is, the induction heating cooking appliance is configured to have the operation portion 6 disposed on the front side of the top plate 2, display the discontinuation icon 10a for discontinuing the cooking on the front side of the cooking container icon 11d corresponding to the cooking container 1 during the cooking, and discontinue the cooking of the cooking container 1 immediately when the discontinuation icon 10a is operated. It is noted that, in the present embodiment, although the one cooking container 1 is indicted by the cooking container icon 11d, in case that two or more cooking containers 1 are placed, it goes without saying that one icon can be selected from the plurality of cooking container icons displayed in the placement state display area 11 and can be operated, and operable display corresponding to the selected cooking container 1 can be switched to be displayed in the menu selection area 9. Further, the selected cooking container 1 can clearly be distinguished by changing the color of the cooking container 1 displayed in the placement state display area 11.

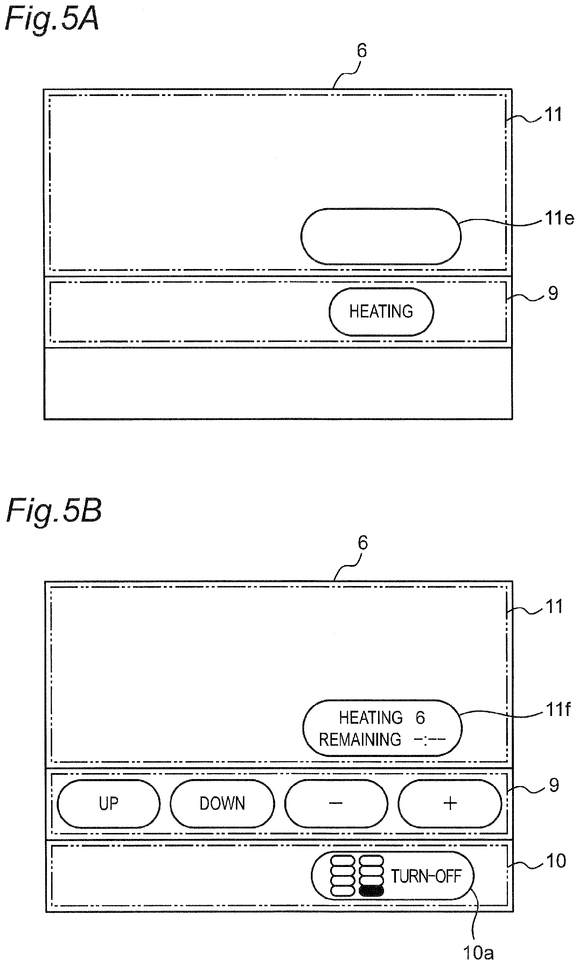

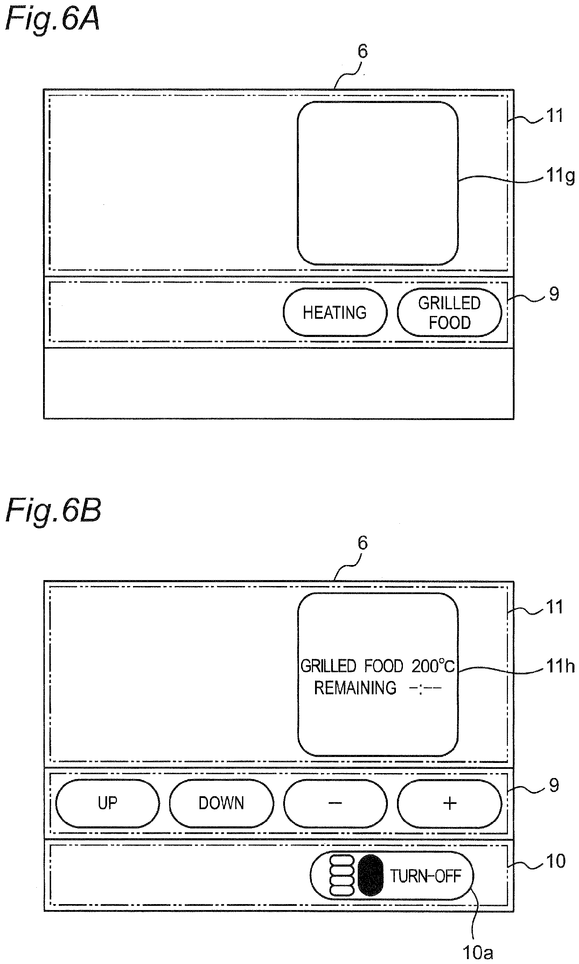

Similarly to Fig. 4A, in Fig. 5A and Fig. 6A, the cooking menus judged to be capable of being cooked by the placed cooking container 1 are displayed.

In Fig. 4A, the cooking container icon 11c of the cooking container 1 placed immediately above the two adjacent heating coils of the heating coil 3a and the heating coil 3b is displayed and it is displayed in the menu selection area 9 that all the cooking menu icons can be selected based on the position at which the cooking container 1 is placed and the size of the cooking container icon 11c.

In Fig. 5A, a cooking container icon 11e of the cooking container 1 placed immediately above only the one heating coil 3a is displayed and it is displayed in the menu selection area 9 that only the cooking menu icons of cooking by the "HEATING" can be selected based on the position at which the cooking container 1 is placed and the size of the cooking container icon 11e. In the present embodiment, temperature sensors (temperature detector means 8) for detecting the temperature of the cooking container 1 are disposed at the center of each of the hating coils and between the heating coils 3. Further, infrared temperature sensors (not shown) are disposed as the temperature sensors disposed between the heating coils 3, and accurately measure the temperature of the bottom face of the cooking container 1 during the cooking of the "FRIED FOOD" and the cooking of the "GRILLED FOOD". Thereby, it is possible to realize safe cooking by performing a temperature control.

In this regard, in the present embodiment, the cooking of the "FRIED FOOD" and the cooking of the "GRILLED FOOD" are realized by the infrared temperature sensors disposed between the grouped and adjacent two or more heating coils 3, while the present invention does not necessarily be limited thereto.

In Fig. 6A, a cooking container icon 11g of the cooking container 1 placed immediately above the four adjacent heating coils of the heating coil 3a, the heating coil 3b, the heating coil 3c, and the heating coil 3d is displayed and a cooking menu icon is displayed in the menu selection area 9 that indicates that the cooking by the "HEATING" and the cooking for the "GRILLED FOOD" can be selected based on the position at which the cooking container 1 is placed and the size of the cooking container icon 11g.

Similarly to Fig. 4B, in Fig. 5B and Fig. 6B, the displays are shown that are displayed after the cooking menu is operated based on the placed cooking container 1 and the cooking is started.

In Fig. 5B, a cooking container icon 11f is displayed that indicates that the cooking container 1 placed immediately above the one heating coil 3a is currently used for cooking by the "HEATING". When the cooking by the "HEATING" is started, the set heating power is set to be six to start the cooking. The set heating power can be set as the electric power in 10 steps from "KEEP WARM" and "HEATING POWER 1" to "HEATING POWER 9" using the operation icon of "UP" or "DOWN" displayed in the menu selection area 9. Further, a turn-off timer can be set that automatically discontinues the cooking after a set time period, by setting the time period by operating the operation icon of "-" or "+". In addition, the discontinuation icon 10a for discontinuing the cooking is displayed in the cooking discontinuation operation area 10 present in the operation panel 6. That is, the induction heating cooking appliance is configured to have the operation portion 6 disposed on the front side of the top plate 2, display the discontinuation icon 10a for discontinuing the cooking on the front side of the cooking container icon 11f corresponding to the cooking container 1 during the cooking, and discontinue the cooking of the cooking container 1 immediately when the discontinuation icon 10a is operated.

In Fig. 6B, a cooking container icon 11h is displayed that indicates that the cooking container 1 placed immediately above the four heating coils of the heating coil 3a, the heating coil 3b, the heating coil 3c, and the heating coil 3d is currently used for cooking of the " GRILLED FOOD". When the cooking of the "GRILLED FOOD" is started, the set temperature is set to be "200°C" to start the cooking. The set temperature can be set as the temperature at every 10°C from "140°C" to "220°C" using the operation icon of "UP" or "DOWN" displayed in the menu selection area 9. Further, the turn-off timer can be set that automatically discontinues the cooking after a set time period, by setting the time period by operating the operation icon of "-" or "+". The discontinuation icon 10a for discontinuing the cooking is displayed in the cooking discontinuation operation area 10 in the operation panel 6. That is, the induction heating cooking appliance is configured to have the operation portion 6 disposed on the front side of the top plate 2, display the discontinuation icon 10a for discontinuing the cooking on the front side of the cooking container icon 11h corresponding to the cooking container 1 during the cooking, and discontinue the cooking of the cooking container 1 immediately when the discontinuation icon 10a is operated.

It is noted that it is assumed in this disclosure that the induction heating cooking appliance includes four elliptical coils on each of the right side and the left side to include eight elliptical coils in total and heats an ordinary container having a diameter of about 18 cm using two adjacent coils, while a more usable cooking appliance is realized when the cooking appliance includes many coils that each are as small as possible, and can more accurately judge the shape of the cooking container.

It is noted that the high-frequency current is supplied to each of the heating coils to detect the placement state of the container in this disclosure while it can be considered that the size and the shape of the container are detected based on variation of the output of the temperature detector means 8 due to the variation of the placement state. Further, the power consumption can also be reduced to be more advantageous when the high-frequency current is supplied to each of the heating coils to detect the size and the shape of the container after detecting any variation of the placement state.

According to the built-in typed induction heating cooking appliance that is the induction heating apparatus of the first embodiment according to the present disclosure configured as above, when a cooking container is placed on the top plate, the position of the placement, and the size and the shape of the container are determined, the icons of the cooking menus capable of being cooked are displayed in a menu selection area, the cooking can immediately be started by operating the icon, and the operations can be realized whose operation is easy to understand. In addition, the display of the placement state display area is made homothetic to the heating coils and which cooking container is the target of the operation is thereby made easy to know to provide a highly reliable and highly safe induction heating apparatus.

### INDUSTRIAL APPLICABILITY

This disclosure presents a highly reliable and highly safe induction heating apparatus having an excellent commodity value, and is applicable to various apparatuses each executing induction heating such as, for example, an induction heating cooking appliance.

### REFERENCE SIGNS LIST

- 1: Cooking container,
- 2: Top plate,
- 3, 3a, 3b, 3c, and 3d: Heating coil,
- 4: Heating controller portion,
- 5: Cooking container detector portion,
- 6: Operation portion,
- 7: Inverter circuit,
- 8: Temperature detector means,
- 9: Menu selection area,
- 10: Cooking discontinuation operation area,
- 11: Placement state display area, and
- 11a, 11b, 11c, 11d, 11e, 11f, 11g, 11h: Cooking container icon

## Claims

1. An induction heating apparatus comprising:
a top plate (2) on which a cooking container (1) for heating materials to be cooked is placed;
a plurality of heating coils (3) configured to generate an induction magnetic field for heating the cooking container (1),
a heating controller portion (4) configured to control high-frequency currents of the heating coils (3) and control heating electric power of the cooking container (1);
at least one or more temperature detector means (8) configured to be disposed at the center or in the vicinity of the heating coils (3) and detect the temperature of the cooking container (1);
a cooking container detector portion (5) configured to supply the heating coils (3) with a high-frequency current in predetermined time intervals and determine the placement state and the material of the cooking container (1) present immediately above each of the heating coils; and
an operation portion (6), wherein in case that the cooking container detector portion (5) detects the cooking containers (1) of the same material immediately above the heating coils (3) adjacent to each other, the cooking container detector portion (5) is configured to judge that the cooking containers (1) are the same one cooking container (1) and determine the size and the shape of the cooking container (1), and
the operation portion (6) is configured to display in a placement state display area (11) a cooking container icon (11a, 11b, 11c, 11d, 11e, 11f, 11g, 11h) corresponding to the size and the shape determined by the cooking container detector portion (5), **characterized in that** the operation portion (6) is configured to further display in a menu selection area (9) one or more cooking menu icons, each cooking menu icon representing a cooking menu adapted to the size and the shape of the cooking container (1) determined by the cooking container detector portion (5) and to the disposition of the temperature detector means (8), and
when the cooking menu icon is operated, the heating controller portion (4) starts cooking of the cooking menu so as to heat the cooking container (1).

2. The induction heating apparatus of claim 1,
wherein the operation portion (6) is disposed on a front side of the top plate (2), and displays a discontinuation icon (10a) for discontinuing the cooking, on a front side of the cooking container icon (11a, 11b, 11c, 11d, 11e, 11f, 11g, 11h) corresponding to the cooking container (1) during the cooking, and
the heating controller portion (4) discontinues the cooking of the cooking container (1) immediately when the discontinuation icon (10a) is operated.

## Patentansprüche

1. Induktionserwärmungsvorrichtung, umfassend:
eine obere Platte (2), auf welcher ein Kochbehälter (1) zum Erwärmen von Kochgut abgestellt ist;
eine Mehrzahl von Heizspulen (3), die dafür ausgelegt sind, ein Induktionsmagnetfeld zum Erwärmen des Kochbehälters (1) zu erzeugen;
einen Erwärmungs-Controllerabschnitt (4), der dafür ausgelegt ist, Hochfrequenzströme der Heizspulen (3) zu steuern und die elektrische Heizenergie für den Kochbehälter (1) zu steuern;
zumindest ein oder mehrere Temperaturdetektormittel (8), die dafür ausgelegt sind, im Mittelpunkt oder in der Nähe der Heizspulen (3) angeordnet zu sein und die Temperatur des Kochbehälters (1) zu detektieren;
einen Kochbehälter-Detektorabschnitt (5), der dafür ausgelegt ist, den Heizspulen (3) in vorbestimmten Zeitintervallen einen Hochfrequenzstrom zuzuführen und den Abstellzustand und das Material des unmittelbar oberhalb einer jeden der Heizspulen vorhandenen Kochbehälters (1) zu bestimmen; und
einen Betätigungsabschnitt (6), wobei für den Fall, dass der Kochbehälter-Detektorabschnitt (5) die Kochbehälter (1) ein und desselben Materials als oberhalb der Heizspulen (3) unmittelbar benachbart zueinander detektiert, der Kochbehälter-Detektorabschnitt (5) dafür ausgelegt ist, davon auszugehen, dass es sich bei den Kochbehältern (1) um ein und denselben Kochbehälter (1) handelt, und die Größe und Form des Kochbehälters (1) zu bestimmen, und
der Betätigungsabschnitt (6) dafür ausgelegt ist, in einem Abstellzustandsanzeigebereich (11) ein Kochbehälter-Symbol (11a, 11b, 11c, 11d, 11e, 11f, 11g, 11h) anzuzeigen, welches der Größe und der Form entspricht, die durch den Kochbehälter-Detektorabschnitt (5) bestimmt worden sind,
**dadurch gekennzeichnet, dass** der Betätigungsabschnitt (6) dafür ausgelegt ist, ferner in einem Menüauswahlbereich (9) ein oder mehrere Kochmenü-Symbole anzuzeigen, wobei jedes Kochmenü-Symbol für ein Kochmenü steht, welches der Größe und der Form des Kochbehälters (1), die durch den Kochbehälter-Detektorabschnitt (5) bestimmt worden sind, und der Anordnung der Temperaturdetektormittel (8) entspricht, und
wenn das Kochmenü-Symbol betätigt wird, der Erwärmungs-Controllerabschnitt (4) den Kochvorgang gemäß dem Kochmenü startet, um den Kochbehälter (1) zu erwärmen.

2. Induktionserwärmungsvorrichtung nach Anspruch 1,
wobei der Betätigungsabschnitt (6) an der Vorderseite der oberen Platte (2) angeordnet ist und auf einer Vorderseite des Kochbehälter-Symbols (11a, 11b, 11c, 11d, 11e, 11f, 11g, 11h), welches dem Kochbehälter (1) während des Kochvorgangs entspricht, ein Abbruch-Symbol (10a) zum Abbrechen des Kochvorgangs anzeigt, und
der Erwärmungs-Controllerabschnitt (4) den Kochvorgang für den Kochbehälter (1) unverzüglich abbricht, wenn das Abbruch-Symbol (10a) betätigt wird.

## Revendications

1. Dispositif de chauffage par induction, lequel comprend :
une plaque supérieure (2) sur laquelle est posé un récipient de cuisson (1) en vue de réchauffer des aliments à cuire ;
une pluralité de bobines chauffantes (3) qui sont conçues pour générer un champ d'induction magnétique destiné à réchauffer le récipient de cuisson (1) ;
une partie de régulation de chauffage (4) qui est conçue pour commander des courants haute fréquence des bobines chauffantes (3) et pour commander l'énergie de chauffage électrique destinée au récipient de cuisson (1) ;
au moins un ou plusieurs moyens de détection de température (8) qui sont conçus pour être disposés au centre ou à proximité des bobines chauffantes (3) et pour détecter la température du récipient de cuisson (1) ;
une partie de détection de récipient de cuisson (5) qui est conçue pour fournir aux bobines chauffantes (3) un courant haute fréquence à des intervalles de temps prédéterminés et pour déterminer la présence ou non d'un récipient de cuisson (1) posé directement au-dessus de chacune des bobines chauffantes ainsi que le matériau de celui-ci ; et
une partie de commande (6), étant donné que, dans le cas où la partie de détection de récipient de cuisson (5) détecte que les récipients de cuisson (1) réalisés en un seul et même matériau sont disposés de manière directement attenante entre eux au-dessus des bobines chauffantes (3), ladite partie de détection de récipient de cuisson (5) est conçue pour partir du principe que lesdits récipients de cuisson (1) ne constituent qu'un seul et même récipient de cuisson (1) et pour déterminer la taille et la forme dudit récipient de cuisson (1), et
ladite partie de commande (6) étant conçue pour afficher, dans une zone d'affichage (11) indiquant la présence ou non de récipient, un symbole de récipient de cuisson (11a, 11b, 11c, 11d, 11e, 11f, 11g, 11h) qui correspond à la taille et à la forme qui ont été déterminées par la partie de détection de récipient de cuisson (5),
**caractérisé en ce que** la partie de commande (6) est conçue pour afficher en outre, dans une zone de sélection de menus (9), un ou plusieurs symboles de menu de cuisson, chaque symbole de menu de cuisson représentant un menu de cuisson qui correspond à la taille et à la forme du récipient de cuisson (1) qui ont été déterminées par la partie de détection de récipient de cuisson (5) et à la disposition des moyens de détection de température (8), et
lorsque le symbole de menu de cuisson est actionné, la partie de régulation de chauffage (4) lance l'opération de cuisson selon le menu de cuisson afin de réchauffer le récipient de cuisson (1).

2. Dispositif de chauffage par induction selon la revendication 1,
dans lequel la partie de commande (6) est disposée sur la face avant de la plaque supérieure (2) et affiche, sur une face avant du symbole de récipient de cuisson (11a, 11b, 11c, 11d, 11e, 11f, 11g, 11h) qui correspond au récipient de cuisson (1) pendant l'opération de cuisson, un symbole d'arrêt (10a) destiné à arrêter l'opération de cuisson, et
la partie de régulation de chauffage (4) arrête immédiatement l'opération de cuisson pour le récipient de cuisson (1) lorsque le symbole d'arrêt (10a) est actionné.
